# FASCICULE DE BREVET EUROPEEN

(11) **EP 2 732 512 B1**
(45) Date de publication et mention de la délivrance du brevet: **16.09.2015**
(21) Numéro de dépôt: 12744075.8
(22) Date de dépôt: 10.07.2012
(51) Int. Cl.: H01S 3/23, H01S 3/07, H01S 3/081, G02B 27/10

(54) **DISPOSITIF ET PROCEDE PASSIF DE COMBINAISON COHERENTE D'UNE PLURALITE D'AMPLIFICATEURS OPTIQUES**
VORRICHTUNG UND PASSIVES VERFAHREN ZUR KOHÄRENTEN KOMBINATION EINER VIELZAHL OPTISCHER VERSTÄRKER
DEVICE AND PASSIVE METHOD FOR THE COHERENT COMBINATION OF A PLURALITY OF OPTICAL AMPLIFIERS

(30) Priorité: 11.07.2011 FR 1156294
(43) Date de publication de la demande: 21.05.2014
(73) Titulaire: Ecole Polytechnique, 91120 Palaiseau (FR)
(72) Inventeur: PAPADOPOULOS, Dimitris, F-75013 Paris (FR); HANNA, Marc, F-91470 Limours (FR); DANIAULT, Louis, F-92130 Issy Les Moulineaux (FR)
(74) Mandataire: Nony
(86) Numéro de dépôt international: PCT/FR2012/051631
(87) Numéro de publication internationale: WO 2013/007945

(56) Documents cités:
- WO-A1-2007/148043
- US-A- 5 307 369
- US-A- 5 832 020
- US-A1- 2006 050 366
- US-A1- 2009 245 304
- KONG HONG ET AL: "Long-term stabilized two-beam combination laser amplifier with stimulated Brillouin scattering mirrors", APPLIED PHYSICS LETTERS, AIP, AMERICAN INSTITUTE OF PHYSICS, MELVILLE, NY, US, vol. 92, no. 2, 17 janvier 2008 (2008-01-17), pages 21120-1-21120-3, XP012106980, ISSN: 0003-6951, DOI: 10.1063/1.2831659

## Description

La présente invention concerne un dispositif et un procédé de combinaison cohérente de faisceaux optiques ou lasers amplifiés séparément. La combinaison cohérente de faisceaux optiques est une technique très prometteuse pour mettre au point des systèmes lasers de forte énergie et/ou de forte puissance moyenne.

La tendance constante à développer des lasers de puissance et ou d'énergie de plus en plus élevées doit faire face à différentes difficultés de réalisation. D'une part, l'augmentation de puissance d'un système laser induit généralement une dégradation de la qualité du faisceau et d'autre part l'efficacité d'extraction aux fortes puissances est limitée par des effets thermiques se produisant à l'intérieur des matériaux amplificateurs.

Une solution envisagée pour obtenir un faisceau de forte énergie et/ou de forte puissance est d'utiliser plusieurs sources ou plusieurs amplificateurs indépendants et de combiner les faisceaux provenant de ces différentes sources ou de ces différents amplificateurs. Cette solution permet de limiter les effets négatifs de dégradation thermiques induits par exemple dans chacun des amplificateurs. Toutefois, afin que le faisceau combiné présente les mêmes qualités optiques (spatiale, spectrale et temporelle) qu'un unique faisceau optique, il est non seulement nécessaire de superposer plusieurs faisceaux optiques spatialement et temporellement, mais il faut aussi que la combinaison des différents faisceaux soit cohérente, c'est-à-dire que la différence de phase relative entre les faisceaux soit nulle et stable dans le temps. La condition de superposition cohérente est très difficile à réaliser pour des faisceaux optiques puisque la différence de phase doit alors rester inférieure à une fraction de longueur d'onde optique. En effet, les phases relatives de différents faisceaux peuvent fluctuer rapidement. Le problème technique le plus difficile que pose la recombinaison cohérente est de maintenir une phase relative constante entre différents faisceaux optiques.

La recombinaison cohérente de plusieurs faisceaux optiques a néanmoins été réalisée au moyen de dispositifs soit passifs soit actifs.

La publication « Laser beam combining for High-Power, high-radiance sources » de T.Y.Fan, IEEE Journal of selected topics in Quantum Electronics, vol. 11, n°3, 2005 indique les conditions fondamentales requises pour effectuer une combinaison de faisceaux lasers (contrôle de la puissance, phase relative, polarisation, amplitude et alignement de chaque faisceau à combiner) et décrit différentes méthodes de combinaison cohérente de faisceaux optiques dans le but d'obtenir un faisceau de forte puissance moyenne et présentant des qualités spatiale, temporelle, spectrale et de polarisation quasi-idéales.

Le document de brevet US 5307369 (D.E. Kimberlin) décrit un système passif de combinaison cohérente de deux milieux amplificateurs placés à l'intérieur d'une cavité résonante commune divisée en deux sous cavités par un miroir semi-réfléchissant. Ce dispositif s'apparente à un oscillateur à double contre réaction-optique, une partie du faisceau émis par le premier amplificateur laser étant injectée dans la sous-cavité du second amplificateur laser et vice versa. Le faisceau laser combiné de sortie résulte des réflexions cohérentes multiples se produisant dans la cavité laser. Ce dispositif permet de doubler la puissance moyenne d'un faisceau laser continu ou d'impulsions laser synchronisées émises par les deux lasers. Toutefois, les différences de chemins optiques entre les deux sous cavités induisent des déphasages qui limitent la stabilité du dispositif passif et la puissance de sortie. De plus, ces dispositifs passifs de combinaison cohérente opèrent dans une cavité et ne peuvent pas être utilisés comme amplificateurs. Or il est souhaitable de combiner un grand nombre de faisceaux en dehors d'une cavité pour bénéficier de plus de possibilités d'architectures de sources.

La combinaison passive apparaissant limitée, différents dispositifs actifs de recombinaison cohérente de faisceaux optiques ont été proposés. La recombinaison active repose sur une mesure directe ou indirecte de la phase relative entre les faisceaux optiques à combiner et sur l'introduction d'un déphasage contrôlé activement par une boucle de contre-réaction sur chaque faisceau optique. Un dispositif actif de recombinaison cohérente prélève généralement une partie du faisceau avant ou après recombinaison pour en extraire une mesure du déphasage entre les faisceaux optiques et adapte en temps réel la phase relative sur chaque faisceau au moyen d'un modulateur acousto-optique, d'un miroir piezo-électrique, ou par l'ajustement de la puissance de pompage optique.

Ainsi, pour les amplificateurs, un dispositif actif de combinaison cohérente est généralement utilisé [Wei Liang, Naresh Satyan, Firooz Aflatouni, Amnon Yariv, Anthony Kewitsch, George Rakuljic, and Hossein Hashemi, "Coherent beam combining with multilevel optical phase-locked loops," J. Opt. Soc. Am. B 24, 2930-2939 (2007) ; T. Shay, V. Benham, J. T. Baker, A. D. Sanchez, D. Pilkington, and C. A. Lu, IEEE J. Sel. Top. Quantum Electron. 13, 480 (2007)]. La combinaison cohérente a été démontrée en régime continu et quasi continu, et récemment en régime femtoseconde [L. Daniault, M. Hanna, L. Lombard, Y. Zaouter, E. Mottay, D. Goular, P. Bourdon, F. Druon, and P. Georges, "Coherent beam combining of two femtosecond fiber chirped-pulse amplifiers," Opt. Lett. 36, 621-623 (2011)].

Toutefois, les dispositifs actifs de recombinaison cohérente sont compliqués car ils nécessitent un système électronique d'asservissement de phase en temps réel, difficile à mettre en oeuvre et coûteux.

Un des buts de l'invention est de proposer un dispositif de combinaison cohérente d'au moins deux faisceaux optiques amplifiés qui soit stable dans le temps et capable de supporter des énergies et/ou puissances élevées.

Un autre but de l'invention de l'invention est de proposer un dispositif de combinaison cohérente de N amplificateurs optiques.

Encore un autre but de l'invention est de proposer un dispositif et un procédé de combinaison cohérente pouvant s'appliquer à tout régime temporel, du continu aux impulsions femtoseconde, à tout type d'amplificateur optique.

La présente invention a pour but de remédier aux inconvénients des techniques antérieures de combinaison cohérente et concerne plus particulièrement un dispositif passif de combinaison cohérente d'une pluralité d'amplificateurs optiques.

Selon l'invention, le dispositif passif de combinaison cohérente comprend un interféromètre à division d'amplitude ayant au moins quatre branches, ledit interféromètre comprenant des moyens optiques de séparation et de combinaison en polarisation ayant quatre ports d'entrée-sortie, chaque port d'entrée-sortie étant relié respectivement à une des quatre branches, la première branche comprenant un premier moyen de polarisation, un premier amplificateur optique bidirectionnel et un premier miroir formant l'extrémité de ladite première branche ; la seconde branche comprenant un second moyen de polarisation, un second amplificateur optique bidirectionnel et un second miroir formant l'extrémité de ladite seconde branche ; la troisième branche comprenant un troisième moyen de polarisation et un troisième miroir formant l'extrémité de ladite troisième branche ; lesdits premier, second et troisième moyens de polarisation étant configurés de manière à ce qu'un faisceau optique polarisé entrant respectivement dans ladite première, seconde ou troisième branche respectivement par le premier, second ou troisième port d'entrée-sortie soit réfléchi respectivement par le premier, second, troisième miroir pour former un faisceau optique polarisé sortant de ladite branche ayant une polarisation orthogonale à la polarisation dudit faisceau optique polarisé entrant dans ladite branche ; la quatrième branche étant une branche d'entrée-sortie dudit interféromètre disposée de manière à recevoir et à diriger un faisceau optique incident polarisé vers le quatrième port d'entrée-sortie ; les moyens optiques de séparation et combinaison de polarisation étant configurés de manière à séparer en polarisation le faisceau incident polarisé en un premier faisceau secondaire d'entrée et un second faisceau secondaire d'entrée, lesdits premier et second faisceaux secondaires d'entrée ayant des polarisations mutuellement orthogonales, le premier faisceau secondaire d'entrée parcourant les première, deuxième et troisième branches de l'interféromètre suivant un premier trajet optique pour former un premier faisceau amplifié de sortie et le second faisceau secondaire d'entrée parcourant les première, deuxième et troisième branches de l'interféromètre suivant un second trajet optique réciproque du premier trajet optique pour former un second faisceau amplifié de sortie, lesdits premier et second faisceaux amplifiés de sortie ayant des polarisations mutuellement orthogonales et lesdits moyens de séparation et de recombinaison étant configurés de manière à recevoir et à recombiner spatialement, temporellement et de manière cohérente ledit premier faisceau amplifié de sortie et ledit second faisceau amplifié de sortie, pour former un faisceau cohérent de sortie se propageant sur la quatrième branche en direction inverse du faisceau optique incident polarisé.

Selon un mode de réalisation particulier du dispositif de l'invention, lesdits moyens de séparation et de recombinaison comprennent un cube séparateur de polarisation.

Selon différents aspects de modes de réalisation particuliers du dispositif de l'invention :
- le dispositif comprend en outre un isolateur optique disposé sur la quatrième branche ;
- lesdits premier, second et/ou troisième moyens de polarisation comprennent une lame quart d'onde ou un rotateur de Faraday bidirectionnel configuré de manière à faire tourner la polarisation d'un faisceau optique polarisé linéairement de 90 degrés après un double passage ;
- lesdits premier et second amplificateurs optiques ont le même gain d'amplification optique ;
- lesdits premier et second amplificateurs optiques comprennent chacun respectivement un amplificateur optique à passages multiples ;
- lesdits premier et second amplificateurs optiques sont des amplificateurs à fibres optiques.

Selon un mode de réalisation particulier, l'invention concerne un dispositif passif de combinaison cohérente de quatre amplificateurs optiques comprenant un dispositif passif de combinaison cohérente de deux amplificateurs optiques selon l'un des modes de réalisation décrits, dans lequel les deux sous-ensembles comprenant un amplificateur optique et un miroir respectivement de la première et de la seconde branche sont remplacés chacun respectivement par un autre dispositif passif de combinaison cohérente de deux amplificateurs optiques selon l'un des modes de réalisation décrits.

Selon un mode de réalisation particulier, l'invention concerne un dispositif passif de combinaison cohérente de 2ⁿ amplificateurs optiques, n étant un nombre entier supérieur ou égal à un, comprenant (1+2ⁿ⁻¹) dispositifs passifs de combinaison cohérente de deux amplificateurs optiques selon l'un des modes de réalisation décrits, dans lequel 2ⁿ⁻¹ dispositifs passifs de combinaison cohérente de deux amplificateurs optiques sont disposés de manière symétrique sur les branches d'un dispositif selon l'un des modes de réalisation décrits.

L'invention concerne aussi un procédé passif de combinaison cohérente d'une pluralité d'amplificateurs optiques comprenant les étapes suivantes :
- couplage d'un faisceau incident polarisé à la quatrième branche d'un dispositif passif de combinaison cohérente selon l'un des modes de réalisation décrits,
- séparation du faisceau incident polarisé en un premier faisceau secondaire d'entrée et un second faisceau secondaire d'entrée, lesdits premier et second faisceaux secondaires d'entrée ayant des polarisations mutuellement orthogonales,
- adressage du premier faisceau secondaire d'entrée de manière à parcourir successivement les première, deuxième et troisième branches de l'interféromètre suivant un premier trajet optique et de manière à ce que le premier faisceau secondaire d'entrée soit amplifié deux fois par le premier amplificateur puis deux fois par le second amplificateur pour former un premier faisceau amplifié de sortie,
- adressage du second faisceau secondaire d'entrée de manière à parcourir successivement la troisième, deuxième et première branche de l'interféromètre suivant un second trajet optique réciproque du premier trajet optique et de manière à ce que le second faisceau secondaire d'entrée soit amplifié deux fois par le second amplificateur puis deux fois par le premier amplificateur pour former un second faisceau amplifié de sortie,
- modification de la polarisation du premier faisceau secondaire à chaque passage dans les première, deuxième et troisième branches de l'interféromètre, la polarisation du premier faisceau secondaire entrant dans une branche étant orthogonale à la polarisation du premier faisceau secondaire sortant de ladite branche,
- modification de la polarisation du second faisceau secondaire à chaque passage dans les première, deuxième et troisième branches de l'interféromètre, la polarisation du second faisceau secondaire entrant dans une branche étant orthogonale à la polarisation du second faisceau secondaire sortant de ladite branche,
- recombinaison spatiale, temporelle et en polarisation du premier faisceau amplifié de sortie et du second faisceau amplifié de sortie, pour former un faisceau cohérent amplifié de sortie se propageant sur la quatrième branche en direction inverse du faisceau optique incident polarisé.

L'invention trouvera une application particulièrement avantageuse dans les systèmes d'amplification optique et les lasers.

La présente invention concerne également les caractéristiques qui ressortiront au cours de la description qui va suivre et qui devront être considérées isolément ou selon toutes leurs combinaisons techniquement possibles.

Cette description donnée à titre d'exemple non limitatif fera mieux comprendre comment l'invention peut être réalisée en référence aux dessins annexés sur lesquels :
- la figure 1 représente schématiquement l'architecture d'une cellule de base d'un dispositif passif de combinaison cohérente selon l'invention ;
- la figure 2 illustre schématiquement la propagation d'un faisceau initialement polarisé s à travers une cellule de base telle que représentée sur la figure 1 ; en insert est représenté schématiquement l'ordre de passage d'un faisceau initialement polarisé s dans les différentes branches ;
- la figure 3 illustre schématiquement la propagation d'un faisceau initialement polarisé p à travers une cellule de base telle que représentée sur la figure 1 ; en insert est représenté schématiquement l'ordre de passage d'un faisceau initialement polarisé p dans les différentes branches ;
- la figure 4 représente schématiquement l'architecture d'un dispositif de combinaison de deux amplificateurs optiques selon un mode de réalisation de l'invention ;
- la figure 5 illustre schématiquement la propagation d'un faisceau initialement polarisé s à travers un dispositif de combinaison de deux amplificateurs tel que représentée sur la figure 4 ; en insert est représenté schématiquement l'ordre de passage d'un faisceau initialement polarisé s dans les différentes branches du dispositif ;
- la figure 6 illustre schématiquement la propagation d'un faisceau initialement polarisé p à travers un dispositif de combinaison de deux amplificateurs tel que représentée sur la figure 4 ; en insert est représenté schématiquement l'ordre de passage d'un faisceau initialement polarisé p dans les différentes branches du dispositif ;
- la figure 7 représente schématiquement l'architecture d'un dispositif de combinaison de quatre amplificateurs optiques selon un autre mode de réalisation de l'invention ;
- la figure 8 illustre schématiquement un amplificateur à passages multiples pouvant être utilisé dans un mode de réalisation particulier de l'invention.

### Description détaillée

Nous proposons un système passif de combinaison cohérente d'un nombre arbitraire d'amplificateurs optiques, pouvant s'appliquer à tout type d'amplificateurs et régimes temporels, du continu aux impulsions femtoseconde. Idéalement le nombre N d'amplificateurs combiné est égal à N=2ⁿ, où n est un nombre entier.

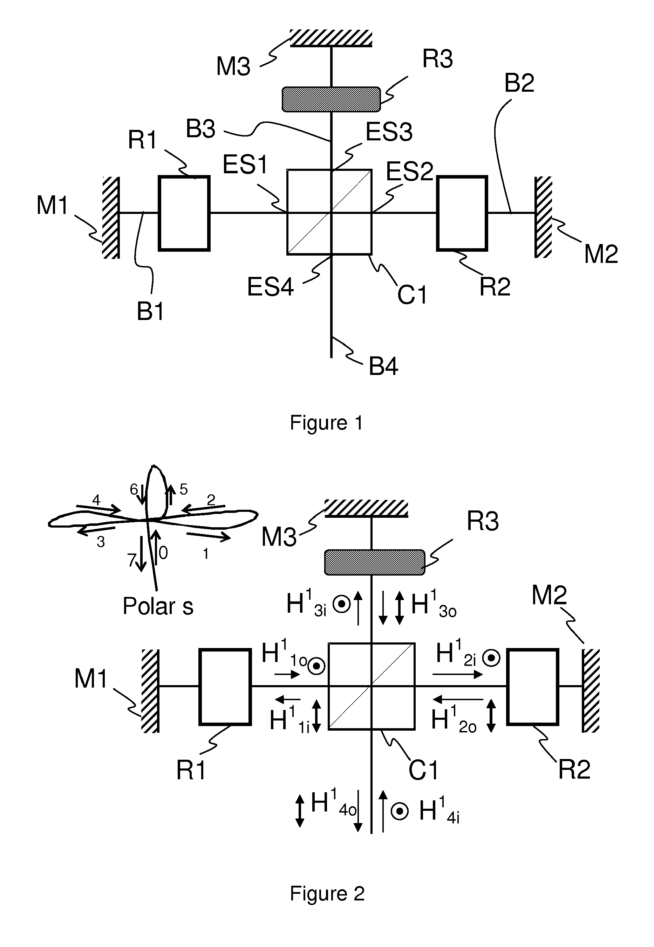

La figure 1 représente une cellule de base permettant de séparer un faisceau optique en deux faisceaux optiques secondaires puis de recombiner de manière cohérente les deux faisceaux partiels après qu'ils aient parcouru des chemins optique réciproques.

La cellule de base de la figure 1 représente un interféromètre à plus de deux branches. Dans un exemple de réalisation, la cellule de base comprend un cube séparateur de polarisation C1 (ou PBS pour Polarisation Beam Splitter) ayant quatre entrées-sorties ES1, ES2, ES3, ES4, chaque entrée-sortie étant reliée respectivement à une branche B1, B2, B3, B4. Les branches B1, B2 et B3 comprennent chacune à leur extrémité un miroir hautement réfléchissant M1, M2, M3. Les branches B1, B2 et B3 sont des branches de rétro-réflexion, un faisceau optique entrant par le port d'entrée-sortie d'une de ces branches B1, B2 ou B3, étant réfléchi suivant un chemin optique inverse vers le même port d'entrée-sortie. La première branche B1 comprend un premier rotateur de Faraday R1 disposé entre le premier port d'entrée-sortie ES1 et le premier miroir M1. De même, la seconde branche B2 comprend un second rotateur de Faraday R2 disposé entre le second port d'entrée-sortie ES2 et le second miroir M2. Le premier rotateur de Faraday R1 est configuré pour faire tourner la polarisation d'un faisceau optique de 45 degrés à chaque passage aller et retour dans la première branche B1, de manière à ce que le faisceau sortant par le port d'entrée-sortie ES1 ait une polarisation orthogonale au même faisceau optique entrant par le même port ES1. De même, le second rotateur de Faraday R2 est configuré pour faire tourner la polarisation d'un faisceau optique de 45 degrés à chaque passage aller et retour dans la seconde branche B2, de manière à ce que le faisceau sortant par le port d'entrée-sortie ES2 ait une polarisation orthogonale au même faisceau optique entrant par le même port ES2. La troisième branche B3 comprend une lame quart d'onde R3 (ou lame λ/4) disposée entre le troisième port d'entrée-sortie ES3 et le troisième miroir M3. Les axes de la lame quart d'onde R3 sont orientés par rapport aux axes propres du cube séparateur de polarisation C1 de manière à ce qu'un faisceau polarisé linéairement entrant dans la branche B3 par le port ES3 soit transformé en un faisceau polarisé circulairement après une première traversée de la lame quart d'onde R3, puis réfléchi par le miroir M3, et retraverse la lame quart d'onde R3 pour former un faisceau sortant de la branche B3 polarisé linéairement, avec une polarisation orthogonale au même faisceau entrant. Ainsi, la polarisation d'un faisceau optique polarisé linéairement effectue une rotation de 90 degrés après chaque passage aller-retour dans chacune des trois branches B1, B2 et B3.

La quatrième branche B4 est la branche d'entrée-sortie dans l'interféromètre. La branche B4 reçoit un faisceau incident S₀ polarisé linéairement, avec un axe de polarisation de préférence à 45 degrés des axes du cube séparateur de polarisation C1. Le cube séparateur de polarisation C1 sépare le faisceau incident S₀ en deux faisceaux secondaires H¹ polarisé linéairement s et H² polarisé p.

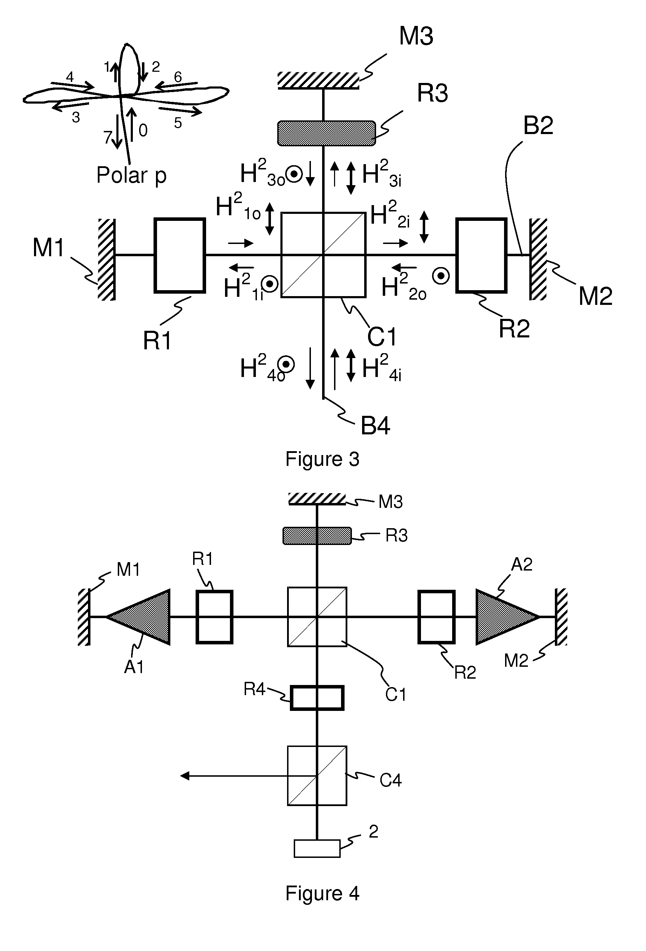

Nous détaillons tout d'abord, en lien avec la figure 2, la propagation du premier faisceau secondaire H¹, initialement polarisé s, à travers la cellule de base. Nous détaillons ensuite la propagation du premier faisceau secondaire, H² initialement polarisé p, à travers la cellule de base, en lien avec la figure 3.

Sur les figures 2 et suivantes un faisceau polarisé s, c'est-à-dire un faisceau de polarisation linéaire perpendiculaire au plan de la feuille est représenté par un disque centré et un faisceau polarisé p, c'est-à-dire un faisceau de polarisation linéaire parallèle au plan de la feuille est représenté par une double flèche. Les flèches simples indiquent le sens de propagation d'un faisceau optique.

La figure 2 représente la même cellule de base que la figure 1, sur laquelle on a représenté schématiquement la propagation de la composante H¹ de polarisation s du faisceau incident S₀. Le port ES4 du cube séparateur reçoit un faisceau entrant H¹₄ᵢ se propageant sur la branche B4. Le faisceau H¹₄ᵢ étant polarisé s, il est réfléchi par le cube séparateur C1 en direction de la branche B2 et forme un faisceau H¹₂ᵢ entrant sur la branche B2 et polarisé s. Après double traversée du rotateur de Faraday R2 et réflexion sur le miroir M2, le faisceau H¹₂ₒ sortant de la deuxième branche B2 est maintenant polarisé p. Le cube séparateur C1 transmet alors ce faisceau H¹₂ₒ en direction de la première branche B1 où il forme un faisceau entrant H¹₁ᵢ polarisé p. Après double traversée du premier rotateur de Faraday R1 et réflexion sur le miroir M1, le faisceau H¹₁ₒ sortant de la première branche B1 est à nouveau polarisé s. Le cube séparateur de polarisation C1 reçoit le faisceau H¹₁ₒ sur le port d'entrée-sortie ES1 et le réfléchit en direction de la troisième branche B3 où il forme un faisceau entrant H¹₃ᵢ polarisé s. Après réflexion sur le miroir M3 et double traversée de la lame quart d'onde R3, le faisceau sortant de la troisième branche H¹₃ₒ est polarisé p. Le cube C1 transmet donc le faisceau H¹₃ₒ polarisé p en direction de la quatrième branche où il forme un premier faisceau secondaire de sortie H¹₄ₒ polarisé p. L'insert de la figure 2 représente schématiquement le trajet optique suivi par la composante H¹ initialement polarisée s à travers la cellule de base : le faisceau H¹ est entré par la quatrième branche B4, a effectué un aller-retour dans la deuxième branche B2, un aller-retour dans la première branche B1, un aller-retour dans la troisième branche B3, puis est ressorti sur la quatrième branche B4 en direction inverse du faisceau incident et avec une polarisation p opposée à la polarisation s de la composante H¹₄ᵢ du faisceau incident S₀.

De manière analogue à la figure 2, la figure 3 représente la même cellule de base, sur laquelle on a représenté schématiquement la propagation de la composante H² de polarisation p du faisceau incident S₀. Le port ES4 du cube séparateur reçoit un faisceau entrant H²₄ᵢ se propageant sur la branche B4. Le faisceau H²₄ᵢ étant polarisé p, il est transmis par le cube séparateur C1 en direction de la branche B3 et forme un faisceau H²₃ᵢ entrant sur la branche B3 et polarisé p. Après réflexion sur le miroir M3 et double traversée de la lame quart d'onde R3, le faisceau sortant de la troisième branche H²₃ₒ est polarisé s. Le cube séparateur de polarisation C1 reçoit le faisceau H²₃ₒ sur le port d'entrée-sortie ES3 et le réfléchit en direction de première branche B1 où il forme un faisceau entrant H²₁ᵢ polarisé s. Après double traversée du premier rotateur de Faraday R1 et réflexion sur le miroir M1, le faisceau H²₁ₒ sortant de la première branche B1 est à nouveau polarisé p. Le cube séparateur C1 transmet alors ce faisceau H²₁ₒ en direction de la deuxième branche B2 où il forme un faisceau entrant H²₂ᵢ polarisé p. Après double traversée du rotateur de Faraday R2 et réflexion sur le miroir M2, le faisceau H²₂ₒ sortant de la deuxième branche B2 est maintenant polarisé s. Le cube réfléchit alors le faisceau H²₂ₒ polarisé s en direction de la quatrième branche où il forme un second faisceau secondaire de sortie H²₄ₒ polarisé s. L'insert de la figure 3 représente schématiquement le trajet optique suivi par la composante H² initialement polarisée p à travers la cellule de base, et l'ordre de passage dans les différentes branches: le faisceau H² est entré par la quatrième branche B4, a effectué un aller-retour dans la troisième branche B3, un aller-retour dans la première branche B1, un aller-retour dans la deuxième branche B2, puis est ressorti sur la quatrième branche B4 en direction inverse du faisceau incident et avec une polarisation s opposée à la polarisation p de la composante H²₄ᵢ du faisceau incident S₀.

Les faisceaux secondaires H¹ et H² effectuent ainsi deux chemins optiques parfaitement réciproques dans l'interféromètre.

Les deux composantes de sortie, respectivement H¹₄ₒ polarisée p et H²₄ₒ polarisée s, se superposent non seulement spatialement et temporellement mais aussi en polarisation pour former un faisceau recombiné polarisé linéairement ayant ses axes propres à 45 degrés des axes p et s, sous réserve que les deux composantes H¹₄ₒ polarisée p et H²₄ₒ polarisée s aient la même amplitude de sortie. Dans le cas où les deux composantes H¹₄ₒ polarisée p et H²₄ₒ polarisée s n'ont pas la même amplitude de sortie, on obtient aussi une recombinaison cohérente en polarisation, le faisceau de sortie ayant toujours une polarisation linéaire, simplement l'axe de polarisation du faisceau recombiné est incliné d'un angle qui dépend des amplitudes respectives des deux composantes. On obtient ainsi en sortie du dispositif passif de la figure 2, un faisceau de sortie S₁ recombiné de manière cohérente.

En résumé, le système optique illustré par les figures 1 à 3, se comporte comme un miroir parfaitement réflectif, pour lequel le faisceau incident S₀ est séparé en deux parties H¹ et H² polarisées orthogonalement qui sont séparées temporellement et spatialement pour être finalement recombinées à la fois temporellement, spatialement et en polarisation, en ayant permuté leurs polarisations respectives. Le faisceau d'entrée possède une polarisation linéaire orientée à 45°des axes neutres du PBS. Ce dernier sépare donc l'entrée en deux faisceaux de même puissance et de polarisations orthogonales s et p. Chacun de ces faisceaux suit un trajet différent à travers le système, mais ces chemins étant réciproques, chaque faisceau secondaire accumule globalement la même phase optique. La recombinaison des deux composantes de polarisations orthogonales permet donc d'obtenir une recombinaison cohérente.

Nous allons maintenant décrire comment un tel dispositif peut avantageusement être utilisé pour combiner des faisceaux amplifiés par des amplificateurs optiques indépendants.

Les figures 4 à 6 représentent schématiquement un dispositif de combinaison cohérente de deux amplificateurs optiques selon un mode de réalisation préféré de l'invention.

La figure 4 représente schématiquement l'architecture d'un dispositif de combinaison de deux amplificateurs optiques. Le dispositif de la figure 4 comprend une cellule de base analogue à celle décrite en lien avec la figure 1. Le dispositif comprend en outre un premier amplificateur optique A1 et un second amplificateur optique A2. Le premier amplificateur optique A1 est disposé sur la première branche B1, de préférence entre le rotateur de Faraday R1 et le miroir M1. De manière symétrique, le second amplificateur optique A2 est disposé sur la seconde branche B2, de préférence entre le rotateur de Faraday R2 et le miroir M2. De préférence, les deux amplificateurs A1 et A2 fonctionnent en polarisation linéaire. Idéalement, les deux amplificateurs A1 et A2 ont les mêmes propriétés (gain, énergie stockée, géométrie) et n'induisent pas de dépolarisation. Le dispositif de la figure 4 comporte en outre une source de lumière 2 qui est par exemple une source laser à impulsions. Le dispositif comporte aussi un isolateur optique formé d'un rotateur de Faraday R4 à 45 degrés et d'un cube séparateur de polarisation C4, l'isolateur optique étant disposé sur la quatrième branche B4 entre la source 2 et l'entrée-sortie ES4.

De manière alternative, par exemple pour des amplificateurs optiques A1 et A2 fonctionnant en polarisation circulaire, on peut remplacer les deux rotateurs de Faraday R1 et R2 respectivement chacun par une lame quart d'onde.

La source de lumière 2 génère un faisceau incident S₀ polarisé linéairement, de polarisation p. Le cube séparateur C4 transmet le faisceau incident S₀ sans modifier sa polarisation. Le rotateur de Faraday R4 est configuré pour faire tourner la polarisation du faisceau S₀ de 45 degrés. Le faisceau incident sur le port d'entrée ES4 comprend alors une composante de polarisation s que nous appellerons H¹₄ᵢ et une composante de polarisation p que nous appellerons H²₄ᵢ.

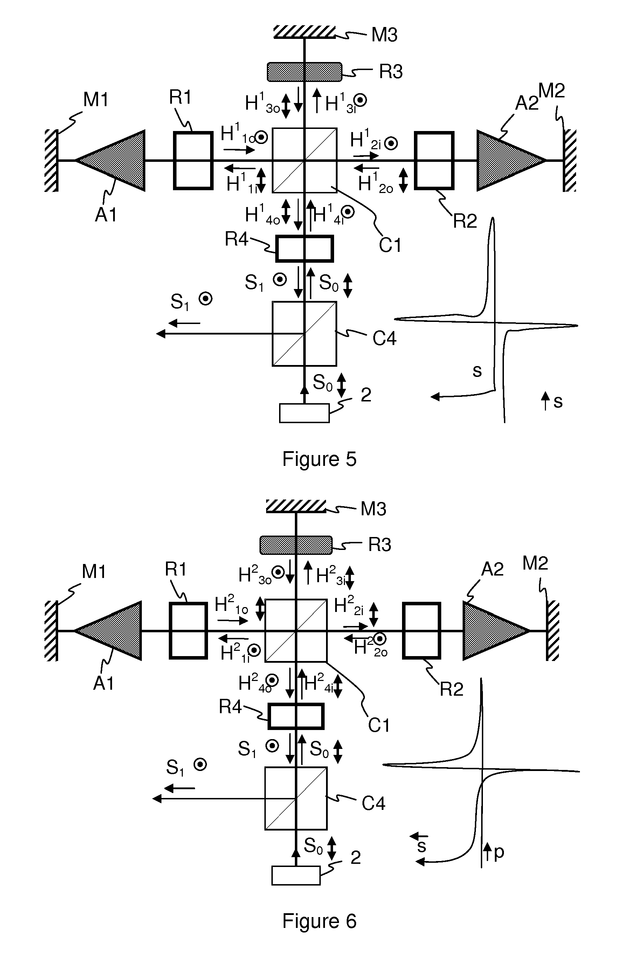

La figure 5 illustre schématiquement la propagation de la composante H¹₄ᵢ initialement polarisée s du faisceau incident à travers un dispositif de combinaison de deux amplificateurs tel que représentée sur la figure 4. Cette composante suit le même trajet optique décrit en lien avec la figure 2. La composante H¹₄ᵢ est tout d'abord réfléchie par le cube C1 en direction de la deuxième branche. A l'aller sur la deuxième branche le faisceau entrant H¹₂ᵢ est polarisé s. Le rotateur de Faraday R2 fait tourner de 45 degrés l'axe de polarisation du faisceau H¹₂ᵢ qui reste polarisé linéairement. Le second amplificateur A2 amplifie une première fois le faisceau H¹₂ᵢ. Après réflexion sur le second miroir M2, le faisceau conserve sa polarisation et est amplifié une deuxième fois par le second amplificateur A2. Le rotateur de Faraday R2 fait tourner de 45 degrés l'axe de polarisation du faisceau H¹₂ₒ qui reste polarisé linéairement, mais avec une polarisation p. Le cube séparateur C1 transmet ce faisceau amplifié deux fois par le second amplificateur en direction de la première branche B1. De manière analogue, le faisceau H¹₂ᵢ entrant sur la branche B1 polarisé p, voit sa polarisation tourner de 45 degrés en passant à travers le rotateur de Faraday R1, puis est amplifié une première fois par le premier amplificateur A1. Après réflexion sur le miroir M1, le faisceau est amplifié une deuxième fois par le premier amplificateur A1 puis sa polarisation est tournée de 45 degrés. Le faisceau sortant de la branche B1, amplifié deux fois par le second amplificateur A2 puis deux fois par le premier amplificateur A1 est réfléchi vers la branche B3 avant de ressortir sur la quatrième branche en un faisceau H¹₄ₒ de polarisation p. En insert sur la figure 5 est représenté schématiquement l'ordre de passage d'un faisceau H¹ initialement polarisé s dans les différentes branches du dispositif.

De manière analogue, la figure 6 illustre schématiquement la propagation de la composante H²₄ᵢ initialement polarisée p du faisceau incident à travers un dispositif de combinaison de deux amplificateurs tel que représentée sur la figure 4. Cette composante H²₄ᵢ suit le même trajet optique décrit en lien avec la figure 3. La composante H²₄ᵢ est tout d'abord transmise par le cube C1 en direction de la troisième branche B3 qui la réfléchit sous la forme d'un faisceau H²₃ₒ polarisé s vers la première branche B1. A l'aller sur la première branche B1, le faisceau entrant H²₁ᵢ est polarisé s. Le rotateur de Faraday R1 fait tourner de 45 degrés l'axe de polarisation du faisceau H²₁ᵢ, qui reste polarisé linéairement. Le premier amplificateur A1 amplifie une première fois le faisceau H²₁ᵢ. Après réflexion sur le premier miroir M1, le faisceau conserve sa polarisation et est amplifié une deuxième fois par le premier amplificateur A1. Le rotateur de Faraday R1 fait tourner de 45 degrés l'axe de polarisation du faisceau H²₁ₒ qui reste polarisé linéairement, mais avec une polarisation p. Le cube séparateur C1 transmet ce faisceau amplifié deux fois par le premier amplificateur en direction de la seconde branche B2. De manière analogue, le faisceau H²₂ᵢ entrant sur la branche B2 polarisé p, voit sa polarisation tourner de 45 degrés en passant à travers le rotateur de Faraday R2, puis est amplifié une première fois par le second amplificateur A2. Après réflexion sur le miroir M2, le faisceau est amplifié une deuxième fois par le second amplificateur A2 puis sa polarisation est tournée de 45 degrés. Le faisceau sortant de la branche B2, amplifié deux fois par le premier amplificateur A1 puis deux fois par le second amplificateur A2 est réfléchi vers la quatrième branche B4 en un faisceau H²₄ₒ de polarisation s. En insert sur la figure 5 est représenté schématiquement l'ordre de passage d'un faisceau initialement polarisé s dans les différentes branches du dispositif.

Sur le port d'entrée-sortie ES4, on obtient donc la superposition spatiale et temporelle d'une composante H²₄ₒ de polarisation p et d'une composante H²₄ₒ de polarisation s, qui forment donc un faisceau S₁ recombiné polarisé linéairement et d'axe de polarisation à 45 degrés des axes propres du cube C1. Le faisceau de sortie recombiné S₁ peut être facilement séparé du faisceau d'entrée en utilisant un isolateur optique. Par exemple, le rotateur de Faraday R4 fait tourner de 45 degrés l'axe de polarisation du faisceau recombiné S₁ qui devient polarisé s. Le cube séparateur C4 réfléchit alors le faisceau de sortie S₁ recombiné cohérent de manière à le séparer de la direction du faisceau incident S₀.

Le dispositif décrit en lien avec les figures 4 à 6 permet une amplification parfaitement symétrique pour les deux faisceaux secondaires. Dans le cas d'un faisceau laser à impulsions, chaque amplificateur voit d'abord une impulsion de faible énergie, puis une impulsion déjà amplifiée une fois. Chaque impulsion voit d'abord un amplificateur complètement inversé par la pompe, puis un amplificateur partiellement déplété par une impulsion précédente. Les faisceaux H¹ et H² sont séparés sur le port d'entrée ES4 de l'interféromètre, se croisent une première fois dans l'interféromètre puis une deuxième fois sur le port d'entrée-sortie ES4 où ils se recombinent. Toutefois, les faisceaux H¹ et H² ne se croisent pas nécessairement dans la branche B1. En effet, la longueur du chemin optique de la branche B3 est beaucoup plus faible que la longueur des branches B1 et B2 qui comprennent chacune un amplificateur optique. En particulier dans le cas d'amplificateurs à fibres optiques, la longueur de chaque amplificateur A1 ou A2 dépasse plusieurs dizaines de centimètres. Avantageusement, la longueur des branches B1, B2 et B3 est optimisée de manière à ce que les faisceaux secondaires H¹ et H² ne se superposent pas temporellement dans l'un des amplificateurs optiques A1 ou A2. D'autre part, la longueur totale des branches B1, B2 et B3 est maintenue la plus courte possible afin de réduire la sensibilité du dispositif interférométrique vis-à-vis des perturbations extérieures.

Dans le dispositif représenté sur les figures 4 à 6, l'amplificateur optique A1 est disposé entre le rotateur de Faraday R1 et le miroir M1, et respectivement l'amplificateur optique A2 est disposé entre le rotateur de Faraday R2 et le miroir M2. Par conséquent, chaque amplificateur optique amplifie avant réflexion et après réflexion sur le miroir un faisceau polarisé suivant un même état de polarisation, avantageusement suivant un axe propre de l'amplificateur. Selon un mode de réalisation alternatif, le rotateur de Faraday R1 (ou la lame quart d'onde équivalente) est disposé entre le l'amplificateur optique A1 et le miroir M1, et/ou respectivement le rotateur de Faraday R2 (ou la lame quart d'onde équivalente) est disposé entre le l'amplificateur optique A2 et le miroir M2. De cette manière, chaque amplificateur A1 (respectivement A2) amplifie une première fois un faisceau polarisé suivant un état de polarisation à l'aller, c'est-à-dire avant réflexion sur le miroir à l'extrémité de sa branche, puis amplifie une deuxième fois, le faisceau polarisé suivant un état de polarisation orthogonal après réflexion sur le miroir.

La généralisation du schéma de la figure 4 au cas de N amplificateur se fait en considérant qu'un système de combinaison décrit selon la figure 4 se comporte comme un seul amplificateur optique en réflexion.

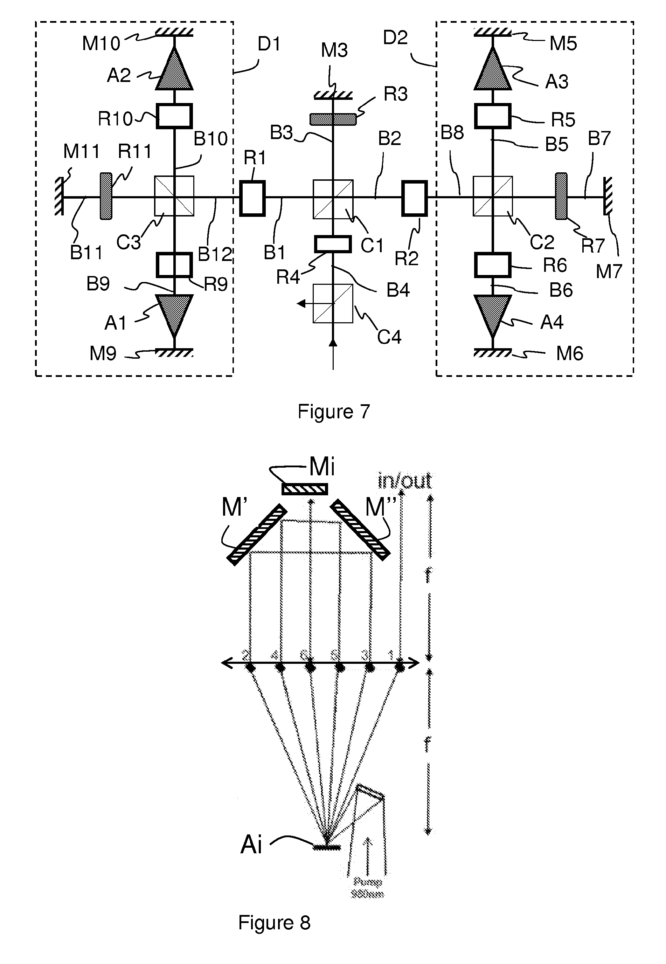

La figure 7 représenté un exemple de dispositif de combinaison cohérente de quatre amplificateurs optiques. Le dispositif de la figure 7 comprend une cellule de base comprenant un cube séparateur de polarisation C1, relié à quatre branches B1, B2, B3, et B4. Les branches B3 et B4 sont identiques à celles de la figure 4. On a remplacé le premier amplificateur A1 et le premier miroir M1 de la première branche B1 par un autre dispositif D1 de combinaison cohérente de deux amplificateur A1 et A2, tel que représenté sur la figure 4. De même, on a remplacé le second amplificateur A2 et le second miroir M2 de la seconde branche B2 par un autre dispositif D2 de combinaison cohérente de deux amplificateur A3 et A4, tel que représenté sur la figure 4. Les rotateurs de Faraday R1 et R2 sont configurés de manière à faire tourner la polarisation de 45 degrés à chaque passage aller ou retour. De cette manière, la polarisation d'un faisceau change de p à s et réciproquement à chaque aller retour dans une branche ayant un miroir à son extrémité. A chaque passage du premier cube séparateur de polarisation C1 vers un autre cube séparateur de polarisation C2 ou C3 un faisceau polarisé linéairement p, respectivement s voit son axe de polarisation tourner de 45 degrés, et est à nouveau séparé sur l'autre cube séparateur de polarisation, respectivement C2 ou C3, en deux sous-faisceaux. Inversement, lorsque deux sous-faisceaux se recombinent en sortie d'un système à deux amplificateur optiques sur la branche B8 respectivement B12 et forment un faisceau polarisé linéairement avec un axe propre incliné de 45 degrés, le rotateur de polarisation R1 respectivement R2 fait tourner cette polarisation à nouveau de 45 degrés. Donc le passage d'un faisceau dans un sous-ensemble D1 respectivement D2 transforme un faisceau incident de polarisation p en un faisceau de sortie de polarisation s et réciproquement. En suivant un raisonnement analogue à celui développé en lien avec les figures 4 à 6, on peut vérifier que la composante initialement polarisée s entrant sur le port d'entrée sortie ES4 sur le premier cube séparateur de polarisation C1 suit successivement le trajet optique suivant à travers les différentes branches du dispositif de la figure 7 : B4-B2-B8, puis est séparée par C2 en deux faisceaux dérivés, l'un des faisceaux dérivés parcourant les branches B7-B6-B5, et l'autre des faisceaux dérivés parcourant les branches B5-B6-B7, ces deux faisceaux dérivés se recombinant sur C2 en un faisceau parcourant les branches B8- B2-B1-B12 puis se séparant à nouveau sur C3 en deux faisceaux dérivés, l'un des faisceaux dérivés parcourant les branches B10-B9-B11, et l'autre des faisceaux dérivés parcourant les branches B11-B9-B10, et ces deux faisceau dérivés se recombinant sur C3 en un faisceau parcourant les branches B12-B1-B3-B4 et forme une composante de sortie polarisée p sur le port d'entrée-sortie ES4. Concernant l'amplification, ce premier faisceau secondaire initialement polarisé s est séparé en deux faisceaux dérivés, l'un des faisceaux dérivés étant amplifié successivement deux fois par l'amplificateur A4 puis deux fois par l'amplificateur A3, pendant que le second faisceau dérivé est amplifié successivement deux fois par l'amplificateur A3 puis deux fois par l'amplificateur A4 ; ces deux faisceaux dérivés amplifiés deux fois (par A3 et A4) sont recombinés en un faisceau secondaire qui est transmis à l'autre étage d'amplification pour y être séparé en deux faisceaux dérivés, l'un des faisceaux dérivés étant amplifié successivement deux fois par l'amplificateur A2 puis deux fois par l'amplificateur A1, pendant que le second faisceau dérivé est amplifié successivement deux fois par l'amplificateur A1 puis deux fois par l'amplificateur A2, ces deux faisceaux dérivés étant recombinés en un faisceau secondaire qui est transmis à la sortie. Réciproquement, la composante initialement polarisée p entrant sur le port d'entrée sortie ES4 sur le premier cube séparateur de polarisation C1 suit successivement le trajet optique suivant à travers les différentes branches du dispositif de la figure 7 : B4- B3 - B1 - B12 puis est séparé en deux faisceaux dérivés, l'un des faisceaux dérivés parcourant les branches B11-B9-B10 pendant que l'autre faisceau dérivé parcourt les branches B10-B9-B11, ces deux faisceaux dérivés se recombinant en un faisceau parcourant les branches B12-B1-B2-B8 puis se séparant à nouveau en deux faisceaux dérivés, l'un des faisceaux dérivés parcourant les branches B5-B6-B7 pendant que l'autre faisceau dérivé parcourt les branches B7-B6-B5, ces deux faisceaux dérivés se recombinant en un faisceau parcourant les branches B8-B2-B4 pour former une composante de sortie polarisée s sur le port d'entrée-sortie ES4. Pour ce qui est de l'amplification, le second faisceau secondaire initialement polarisé p, est séparé en deux faisceaux dérivés, l'un des faisceaux dérivés étant amplifié successivement deux fois par l'amplificateur A1, puis deux fois par l'amplificateur A2, pendant que le second faisceau dérivé est amplifié successivement deux fois par l'amplificateur A2 puis deux fois par l'amplificateur deux fois par l'amplificateur A1 ; ces deux faisceaux dérivés amplifiés deux fois (par A1 et A2) sont recombinés en un faisceau secondaire qui est transmis à l'autre étage d'amplification pour y être séparé en deux faisceaux dérivés, l'un des faisceaux dérivés étant amplifié successivement deux fois par l'amplificateur A3 puis deux fois par l'amplificateur A4, pendant que le second faisceau dérivé est amplifié successivement deux fois par l'amplificateur A4 puis deux fois par l'amplificateur A3, ces deux faisceaux dérivés étant recombinés en un faisceau secondaire qui est transmis à la sortie. On constate que les faisceaux secondaires ont des trajets optiques passant par toutes les branches du dispositif et dans un ordre exactement inverse c'est-à-dire suivant des chemins parfaitement réciproques deux à deux.

Cette méthode permet donc la combinaison cohérente passive de N amplificateurs, mais de plus, chacun des amplificateurs opère comme un amplificateur à N passages. Ainsi, si on augmente le nombre d'amplificateurs, on augmente également le nombre de passage dans ceux-ci, améliorant ainsi l'efficacité d'extraction. Ceci est particulièrement utile dans le cas d'amplificateurs ayant un faible gain pour un passage, mais une grande fluence de saturation. Si N=2ⁿ, avec n entier, comme dans le cas de deux amplificateurs, l'ordre des passages dans chacun des amplificateurs correspond exactement à la situation dans laquelle on aurait un unique amplificateur à plusieurs passages, quel que soit le nombre total d'amplificateurs combinés. Ainsi, pendant la phase d'amplification correspondant au k^{ième} passage dans les amplificateurs, toutes les impulsions ont déjà vu (k-1) passages dans les autres amplificateurs, et chaque amplificateur a déjà amplifié (k-1) impulsions. Lors du processus d'amplification, tous les amplificateurs restent ainsi équivalents (gain au k^{ième} passage, énergie stockée restante) et chaque réplique possède la même énergie. Cette propriété garantit une combinaison cohérente efficace puisqu'elle se traduit par un équilibre constant dans les puissances contenues par chacun des états de polarisations s et p à chaque point du réseau d'amplification.

Afin de démontrer les capacités du dispositif et procédé de l'invention nous détaillons un exemple de réalisation basé sur une combinaison cohérente de quatre amplificateurs à base de cristal Yb:CaF₂. Ce matériau présente un très grand intérêt du à certaines propriétés, parmi lesquelles sa très grande capacité de stockage d'énergie de la source de pompage. Toutefois, son gain relativement faible a jusqu'à présent limité l'efficacité d'extraction d'énergie à partir d'amplificateurs standard à base de Yb:CaF₂ à environ ∼10%. L'exemple suivant montre la capacité de la technique de combinaison cohérente pour obtenir à la fois une forte énergie de sortie et une excellente l'efficacité d'extraction.

La figure 8 illustre schématiquement un amplificateur à passages multiples pouvant être utilisé dans un mode de réalisation particulier de l'invention. En particulier, nous faisons référence à un dispositif tel que celui de la figure 7, dans lequel chacun des amplificateurs optiques A1, A2, A3, A4 est constitué un amplificateur à passages multiples du type de celui représenté sur la figure 8.

La configuration multi-passage de la figure 8 est une configuration classique basée sur un système d'imagerie 2f-2f comprenant une lentille de focale f, un rétro-réflecteur (miroirs M', M" et Mi) à une distance f de la lentille et un milieu amplificateur Ai placé aussi à une distance f de la lentille dans une configuration dite de "miroir actif". Ceci est obtenu en disposant un revêtement anti-reflet sur la face avant du cristal aux deux longueurs d'onde de signal et de pompe (1030 nm et 980nm respectivement) et un revêtement fortement réfléchissant sur la face arrière à ces deux longueurs d'onde. En supposant que le système optique et le cristal n'introduisent pas d'aberrations, le faisceau est continument réimagé dans le plan du cristal (après chaque passage à travers le cristal) et le plan objet d'entrée est imagé sur le plan image de sortie. Dans l'exemple particulier, considérons un cristal de Yb:CaF₂ de 5mm d'épaisseur, dopé à 2.7% et un nombre total de 6 passages (un passage est ici défini comme un passage complet de l'entrée jusqu'à la sortie du cristal). On considère une puissance de pompe disponible de 1 kW au total à 980 nm, que nous supposons distribuée à égalité entre quatre amplificateurs identiques que l'on souhaite combiner. En supposant que la période de répétition de la pompe est égale à la constante de temps de fluorescence du cristal utilisé, c'est-à-dire de 2.4 ms, la puissance de pompe Eₚₒₘₚₑ correspond à 2.4 J, l'énergie totale de pompe étant distribuée également entre les quatre amplificateurs (pour chaque cycle d'amplification). Une impulsion d'entrée ayant une énergie de 8 mJ à 1030 nm est étirée temporellement à une durée suffisante (∼10ns) pour éviter tout dommage optique. La fluence du signal amplifié sur le cristal est maintenue en dessous du seuil de dommage de 5J/cm². On considère que les composants optiques présentent une efficacité supérieure respectivement à 99.9% pour les miroirs et lentilles, 99.5% pour les lames quart d'onde et d'environ 99% pour les cubes séparateurs et les rotateurs de Faraday. Dans ces conditions, chaque amplificateur stocke environ 390 mJ, ce qui correspond à un gain petit signal d'environ 1,3. Prenant en considération les pertes des composants optiques du système et supposant une efficacité de recombinaison finale de 95%, une simulation d'un réseau cohérent à quatre amplificateur permet d'obtenir une énergie de sortie E_{out,totale} égale à 1 J (c'est-à-dire environ 265mJ par amplificateur), correspondant à un gain total Gₜₒₜ égal à 125, et une efficacité globale n_{global} égale à 41% (Eₚₒₘₚₑ/Eₒᵤₜ, total), pour une efficacité d'extraction nₑₓₜᵣ approchant 64%, l'efficacité d'extraction étant définie comme le rapport entre l'énergie stockée dans le milieu actif et l'énergie de sortie. En augmentant le nombre de passages à 10 dans chaque amplificateur, ces performances peuvent être encore améliorées avec : une énergie de sortie E_{out,totale} égale à 1.2 J, un gain total Gtot égal à 150, une efficacité globale n_{global} égale à 50% et une efficacité d'extraction nₑₓₜᵣ égale à 82%.

Cette technique permet de combiner de manière cohérente et passive N (N=2ⁿ, avec n entier) amplificateurs optiques. Cette méthode consiste à diviser le faisceau incident en N répliques, chacune se propageant à travers le réseau d'amplification constitué de N amplificateurs. Ainsi, chaque réplique est amplifiée à la même énergie finale. Les différentes répliques suivent ainsi des chemins optiques réciproques deux à deux et accumulent une phase optique identique. En sortie du réseau d'amplificateurs, la combinaison cohérente des N répliques est donc possible.

Le dispositif de combinaison cohérente de l'invention présente de nombreux avantages. Premièrement, ce dispositif est passif, ce qui simplifie considérablement la complexité du montage, comparé à un dispositif actif de combinaison cohérente basé sur un système d'asservissement temps réel. Ensuite, le dispositif permet de combiner simplement non seulement deux amplificateurs optiques mais un nombre N d'amplificateurs pouvant être très supérieur à deux, tout en améliorant les performances de chaque amplificateur. En effet, le dispositif permet d'améliorer l'efficacité d'extraction de chaque amplificateur optique à mesure que le nombre d'amplificateurs augmente, l'amplification étant distribuée entre les différents amplificateurs et divisée en plusieurs passages pour chaque amplificateur.

## Revendications

1. Dispositif passif de combinaison cohérente d'une pluralité d'amplificateurs optiques, **caractérisé en ce que** ledit dispositif comprend un interféromètre à division d'amplitude ayant au moins quatre branches (B1, B2, B3, B4), ledit interféromètre comprenant :
- des moyens optiques de séparation et de combinaison en polarisation (C1) ayant quatre ports d'entrée-sortie (ES1, ES2, ES3, ES4), chaque port d'entrée-sortie (ES1, ES2, ES3, ES4) étant relié respectivement à une des quatre branches (B1, B2, B3, B4),
- la première branche (B1) comprenant un premier moyen de polarisation (R1), un premier amplificateur optique bidirectionnel (A1) et un premier miroir (M1) formant l'extrémité de ladite première branche (B1),
- la seconde branche (B2) comprenant un second moyen de polarisation (R2), un second amplificateur optique bidirectionnel (A2) et un second miroir (M2) formant l'extrémité de ladite seconde branche (B2),
- la troisième branche (B3) comprenant un troisième moyen de polarisation (R3) et un troisième miroir (M3) formant l'extrémité de ladite troisième branche (B3),
- lesdits premier, second et troisième moyens de polarisation (R1, R2, R3) étant configurés de manière à ce qu'un faisceau optique polarisé entrant respectivement dans ladite première, seconde ou troisième branche (B1, B2, B3) respectivement par le premier, second ou troisième port d'entrée-sortie soit réfléchi respectivement par le premier, second, troisième miroir (M1, M2, M3) pour former un faisceau optique polarisé sortant de ladite branche ayant une polarisation orthogonale à la polarisation dudit faisceau optique polarisé entrant dans ladite branche,
- la quatrième branche (B4) étant une branche d'entrée-sortie dudit interféromètre disposée de manière à recevoir et à diriger un faisceau optique incident polarisé (S₀) vers le quatrième port d'entrée-sortie (ES4),
- les moyens optiques de séparation et combinaison de polarisation (C1) étant configurés de manière à séparer en polarisation le faisceau incident polarisé (S₀) en un premier faisceau secondaire d'entrée (H¹₄ᵢ) et un second faisceau secondaire d'entrée (H²₄ᵢ), lesdits premier et second faisceaux secondaires d'entrée ayant des polarisations mutuellement orthogonales, le premier faisceau secondaire d'entrée (H¹₄ᵢ) parcourant les première, deuxième et troisième branches de l'interféromètre suivant un premier trajet optique pour former un premier faisceau amplifié de sortie (H¹₄ₒ) et le second faisceau secondaire d'entrée (H²₄ᵢ) parcourant les première, deuxième et troisième branches de l'interféromètre suivant un second trajet optique réciproque du premier trajet optique pour former un second faisceau amplifié de sortie (H²₄ₒ), lesdits premier et second faisceaux amplifiés de sortie (H¹₄ₒ, H²₄ₒ) ayant des polarisations mutuellement orthogonales, et
- lesdits moyens de séparation et de recombinaison (C1) étant configurés de manière à recevoir et à recombiner spatialement, temporellement et de manière cohérente ledit premier faisceau amplifié de sortie (H¹₄ₒ) et ledit second faisceau amplifié de sortie (H²₄ₒ), pour former un faisceau cohérent de sortie (S₁) se propageant sur la quatrième branche (B4) en direction inverse du faisceau optique incident polarisé (S₀).

2. Dispositif passif de combinaison cohérente selon la revendication 1 dans lequel lesdits moyens de séparation et de recombinaison comprennent un cube séparateur de polarisation (C1).

3. Dispositif passif de combinaison cohérente selon l'une des revendications 1 à 2, comprenant en outre un isolateur optique (R4, C4) disposé sur la quatrième branche (B4).

4. Dispositif passif de combinaison cohérente selon l'une des revendications 1 à 3, dans lequel lesdits premier, second et/ou troisième moyens de polarisation (R1, R2, R3) comprennent une lame quart d'onde ou un rotateur de Faraday bidirectionnel configuré de manière à faire tourner la polarisation d'un faisceau optique polarisé linéairement de 90 degrés après un double passage.

5. Dispositif passif de combinaison cohérente selon l'une des revendications 1 à 4, dans lequel lesdits premier et second amplificateurs optiques ont le même gain d'amplification optique.

6. Dispositif passif de combinaison cohérente selon l'une des revendications 1 à 5, dans lequel lesdits premier et second amplificateurs optiques (A1, A2) comprennent chacun respectivement un amplificateur optique à passages multiples.

7. Dispositif passif de combinaison cohérente selon l'une des revendications 1 à 6, dans lequel lesdits premier et second amplificateurs optiques (A1, A2) sont des amplificateurs à fibres optiques.

8. Dispositif passif de combinaison cohérente de quatre amplificateurs optiques (A1, A2, A3, A4), comprenant un dispositif passif de combinaison cohérente de deux amplificateurs optiques selon l'une des revendications 1 à 7, dans lequel les deux sous-ensembles comprenant un amplificateur optique (A1, A2) et un miroir (M1, M2) respectivement de la première et de la seconde branche (B1, B2) sont remplacés chacun respectivement par un autre dispositif passif de combinaison cohérente de deux amplificateurs optiques selon l'une des revendications 1 à 7.

9. Dispositif passif de combinaison cohérente de 2ⁿ amplificateurs optiques (A1, A2,... A2ⁿ), n étant un nombre entier supérieur ou égal à un, comprenant (1+2ⁿ⁻¹) dispositifs passifs de combinaison cohérente de deux amplificateurs optiques selon l'une des revendications 1 à 7, dans lequel 2ⁿ⁻¹ dispositifs passifs de combinaison cohérente de deux amplificateurs optiques sont disposés de manière symétrique sur les branches d'un dispositif selon l'un des modes de réalisation décrits selon l'une des revendications 1 à 7.

10. Procédé passif de combinaison cohérente d'une pluralité d'amplificateurs optiques comprenant les étapes suivantes :
- couplage d'un faisceau incident polarisé (S₀) à la quatrième branche d'un dispositif passif de combinaison cohérente selon l'une des revendications 1 à 9,
- séparation du faisceau incident polarisé (S₀) en un premier faisceau secondaire d'entrée (H¹) et un second faisceau secondaire d'entrée (H²), lesdits premier et second faisceaux secondaires d'entrée ayant des polarisations mutuellement orthogonales,
- adressage du premier faisceau secondaire d'entrée (H¹) de manière à parcourir successivement les première, deuxième et troisième branches de l'interféromètre suivant un premier trajet optique et de manière à ce que le premier faisceau secondaire d'entrée (H¹) soit amplifié deux fois par le premier amplificateur (A1) puis deux fois par le second amplificateur (A2) pour former un premier faisceau amplifié de sortie (H¹₄ₒ),
- adressage du second faisceau secondaire d'entrée (H²) de manière à parcourir successivement les première, deuxième et troisième branches de l'interféromètre suivant un second trajet optique réciproque du premier trajet optique et de manière à ce que le second faisceau secondaire d'entrée (H²) soit amplifié deux fois par le second amplificateur (A2) puis deux fois par le premier amplificateur (A1) pour former un second faisceau amplifié de sortie (H²₄ₒ),
- modification de la polarisation du premier faisceau secondaire à chaque passage dans les première, deuxième et troisième branches de l'interféromètre, la polarisation du premier faisceau secondaire entrant dans une branche étant orthogonale à la polarisation du premier faisceau secondaire sortant de ladite branche,
- modification de la polarisation du second faisceau secondaire à chaque passage dans les première, deuxième et troisième branches de l'interféromètre, la polarisation du second faisceau secondaire entrant dans une branche étant orthogonale à la polarisation du second faisceau secondaire sortant de ladite branche,
- recombinaison spatiale, temporelle et en polarisation du premier faisceau amplifié de sortie (H¹₄ₒ) et du second faisceau amplifié de sortie (H²₄ₒ), pour former un faisceau cohérent amplifié de sortie (S₁) se propageant sur la quatrième branche (B4) en direction inverse du faisceau optique incident polarisé (S₀).

## Patentansprüche

1. Passive Vorrichtung zur kohärenten Kombination von mehreren optischen Verstärkern, **dadurch gekennzeichnet, dass** die Vorrichtung ein Interferometer mit Amplitudenteilung aufweist, das mindestens vier Zweige (B1, B2, B3, B4) aufweist, wobei das Interferometer Folgendes aufweist:
- optische Polarisationsteilungs- und kombinationsmittel (C1), die vier Eingangs/Ausgangsanschlüsse (ES1, ES2, ES3, ES4) aufweisen, wobei jeder Eingangs/Ausgangsanschluss (ES1, ES2, ES3, ES4) jeweils mit einem der vier Zweige (B1, B2, B3, B4) verbunden ist,
- wobei der erste Zweig (B1) ein erstes Polarisationsmittel (R1), einen ersten bidirektionalen optischen Verstärker (A1) und einen ersten Spiegel (M1) aufweist, der das Ende des ersten Zweiges (B1) bildet,
- wobei der zweite Zweig (B2) ein zweites Polarisationsmittel (R2), einen zweiten bidirektionalen optischen Verstärker (A2) und einen zweiten Spiegel (M2) aufweist, der das Ende des zweiten Zweiges (B2) bildet,
- wobei der dritte Zweig (B3) ein drittes Polarisationsmittel (R3) und einen dritten Spiegel (M3) bildet, der das Ende des dritten Zweiges (B3) bildet,
- wobei das erste, zweite und dritte Polarisationsmittel (R1, R2, R3) derart ausgestaltet sind, dass ein polarisierter optischer Strahl, der in den ersten, zweiten, beziehungsweise dritten Zweig (B1, B2, B3) durch den ersten, zweiten, beziehungsweise dritten Eingangs/Ausgangsanschluss eintritt, durch den ersten, zweiten, beziehungsweise dritten Spiegel (M1, M2, M3) reflektiert wird, um einen aus dem Zweig austretenden polarisierten optischen Strahl zu bilden, der eine Polarisation aufweist, die orthogonal zur Polarisation des in den Zweig eintretenden polarisierten optischen Strahles ist,
- der vierte Zweig (B4) ein Eingangs/Ausgangszweig des Interferometers ist, der derart angeordnet ist, dass er einen polarisierten einfallenden optischen Strahl (S₀) in Richtung des vierten Eingangs/Ausgangsanschlusses (ES4) leitet,
- die optischen Polarisationsteilungs- und kombinationsmittel (C1) derart ausgestaltet sind, dass sie den polarisierten einfallenden Strahl (S₀) in einen ersten sekundären Eingangsstrahl (H¹₄ᵢ) und einen zweiten sekundären Eingangsstrahl (H²₄ᵢ) nach Polarisation teilen, wobei der erste und der zweite sekundäre Eingangsstrahl zueinander orthogonale Polarisationen aufweisen, wobei der erste sekundäre Eingangsstrahl (H¹₄ᵢ), den ersten, zweiten und dritten Zweig des Interferometers entlang eines ersten Lichtwegs durchläuft, um einen ersten verstärkten Ausgangsstrahl (H¹₄ₒ) zu bilden, und der zweite sekundäre Eingangsstrahl (H²₄ᵢ) den ersten, zweiten und dritten Zweig des Interferometers entlang eines zweiten Lichtwegs durchläuft, der reziprok zum ersten Lichtweg ist, um einen zweiten verstärkten Ausgangsstrahl (H²₄ₒ) zu bilden, wobei der erste und der zweite verstärkte Ausgangsstrahl (H¹₄ₒ, H²₄ₒ) zueinander orthogonale Polarisationen aufweisen, und
- die Teilungs- und Rekombinationsmittel (C1) derart ausgestaltet sind, dass sie den ersten verstärkten Ausgangsstrahl (H¹₄ₒ) und den zweiten verstärkten Ausgangsstrahl (H²₄ₒ) empfangen und räumlich, zeitlich und kohärent rekombinieren, um einen kohärenten Ausgangsstrahl (S₁) zu bilden, der sich auf dem vierten Zweig (B4) in der dem polarisierten einfallenden Strahl (S₀) entgegengesetzten Richtung ausbreitet.

2. Passive Vorrichtung zur kohärenten Kombination nach Anspruch 1, wobei die Teilungs- und Rekombinationsmittel einen Polarisationsteilerwürfel (C1) aufweisen.

3. Passive Vorrichtung zur kohärenten Kombination nach einem der Ansprüche 1 bis 2, die ferner einen optischen Isolator (R4, C4) aufweist, der auf dem vierten Zweig (B4) angeordnet ist.

4. Passive Vorrichtung zur kohärenten Kombination nach einem der Ansprüche 1 bis 3, wobei das erste, zweite und/oder dritte Polarisationsmittel (R1, R2, R3) ein Viertelwellenlängenplättchen oder einen bidirektionalen Faraday-Rotator aufweisen, das/der derart ausgestaltet ist, dass es/er die Polarisation eines linear polarisierten optischen Strahles nach einem Doppeldurchgang um 90 Grad zum Drehen bringt.

5. Passive Vorrichtung zur kohärenten Kombination nach einem der Ansprüche 1 bis 4, wobei der erste und zweite optische Verstärker denselben optischen Verstärkungsgrad aufweisen.

6. Passive Vorrichtung zur kohärenten Kombination nach einem der Ansprüche 1 bis 5, wobei der erste und der zweite optische Verstärker (A1, A2) jeder jeweils einen optischen Verstärker mit Mehrfachdurchgang aufweisen.

7. Passive Vorrichtung zur kohärenten Kombination nach einem der Ansprüche 1 bis 6, wobei der erste und der zweite optische Verstärker (A1, A2) Lichtleitfaserverstärker sind.

8. Passive Vorrichtung zur kohärenten Kombination von vier optischen Verstärkern (A1, A2, A3, A4), die eine passive Vorrichtung zur kohärenten Kombination von zwei optischen Verstärkern nach einem der Ansprüche 1 bis 7 aufweist, wobei die zwei Untergruppen, die einen optischen Verstärker (A1, A2) und einen Spiegel (M1, M2) des ersten beziehungsweise zweiten Zweiges (B1, B2) aufweisen, jeweils durch eine andere passive Vorrichtung zur kohärenten Kombination von zwei optischen Verstärkern nach einem der Ansprüche 1 bis 7 ersetzt sind.

9. Passive Vorrichtung zur kohärenten Kombination von 2ⁿ optischen Verstärkern (A1, A2,... A2ⁿ), wobei n eine Ganzzahl größer oder gleich eins ist, die (1+2ⁿ⁻¹) passive Vorrichtungen zur kohärenten Kombination von zwei optischen Verstärkern nach einem der Ansprüche 1 bis 7 aufweisen, wobei 2ⁿ⁻¹ passive Vorrichtungen zur kohärenten Kombination von zwei optischen Verstärkern auf symmetrische Art und Weise auf den Zweigen einer Vorrichtung nach einer der beschriebenen Ausführungsformen nach einem der Ansprüche 1 bis 7 angeordnet sind.

10. Passives Verfahren zur kohärenten Kombination mehrerer optischer Verstärker, das die folgenden Schritte aufweist:
- Koppeln eines polarisierten einfallenden Strahles (S₀) mit dem vierten Zweig einer passiven Vorrichtung zur kohärenten Kombination nach einem der Ansprüche 1 bis 9,
- Teilung des polarisierten einfallenden Strahles (S0) in einen ersten sekundären Eingangsstrahl (H¹) und einen zweiten sekundären Eingangsstrahl (H²), wobei der erste und der zweite sekundäre Eingangsstrahl zueinander orthogonale Polarisationen aufweisen,
- Adressierung des ersten sekundären Eingangsstrahls (H¹) derart, dass er nacheinander den ersten, zweiten und dritten Zweig des Interferometers entlang eines ersten Lichtwegs durchläuft, und derart, dass der erste sekundäre Eingangsstrahl (H¹) zwei Mal durch den ersten Verstärker (A1) und dann zwei Mal durch den zweiten Verstärker (A2) verstärkt wird, um einen ersten verstärkten Ausgangsstrahl (H¹₄ₒ) zu bilden,
- Adressierung des zweiten sekundären Eingangsstrahls (H²) derart, dass er nacheinander den ersten, zweiten und dritten Zweig des Interferometers entlang eines zweiten Lichtwegs durchläuft, der reziprok zum ersten Lichtweg ist, und derart, dass der zweite sekundäre Eingangsstrahl (H²) zwei Mal durch den zweiten Verstärker (A2) und dann zwei Mal durch den ersten Verstärker (A1) verstärkt wird, um einen zweiten verstärkten Ausgangsstrahl (H²₄ₒ) zu bilden,
- Änderung der Polarisation des ersten sekundären Strahles bei jedem Durchgang im ersten, zweiten und dritten Zweig des Interferometers, wobei die Polarisation des ersten sekundären Strahles, der in einen Zweig eintritt, orthogonal zur Polarisation des ersten sekundären Strahles ist, der aus dem Zweig austritt,
- Änderung der Polarisation des zweiten sekundären Strahles bei jedem Durchgang im ersten, zweiten und dritten Zweig des Interferometers, wobei die Polarisation des zweiten sekundären Strahles, der in einen Zweig eintritt, orthogonal zur Polarisation des zweiten sekundären Strahles ist, der aus dem Zweig austritt,
- räumliche, zeitliche und Polarisationsrekombination des ersten verstärkten Ausgangsstrahls (H¹₄ₒ) und des zweiten verstärkten Ausgangsstrahls (H²₄ₒ) zum Bilden eines verstärkten kohärenten Ausgangsstrahls (S₁), der sich auf dem vierten Zweig (B4) in dem polarisierten einfallenden optischen Strahl (S₀) entgegengesetzter Richtung auf dem vierten Zweig (B4) ausbreitet.

## Claims

1. Passive device for coherent combination of a plurality of optical amplifiers, **characterised in that** said device comprises an amplitude division interferometer having at least four arms (B1, B2, B3, B4), said interferometer comprising:
- optical polarization splitting and combining means (C1) having four input/output ports (ES1, ES2, ES3, ES4), each input/output port (ES1, ES2, ES3, ES4) being connected to one of the four arms (B1, B2, B3, B4), respectively,
- the first arm (B1) comprising a first polarizing means (R1), a first bidirectional optical amplifier (A1) and a first mirror (M1) forming the end of said first arm (B1),
- the second arm (B2) comprising a second polarizing means (R2), a second bidirectional optical amplifier (A2) and a second mirror (M2) forming the end of said second arm (B2),
- the third arm (B3) comprising a third polarizing means (R3) and a third mirror (M3) forming the end of said third arm (B3),
- said first, second and third polarizing means (R1, R2, R3) being configured so that a polarized optical beam entering into said first, second or third arm (B1, B2, B3), respectively, via the first, second or third input/output port, respectively, is reflected by the first, second or third mirror (M1, M2, M3), respectively, in order to form a polarized optical beam exiting from said arm, having a polarization orthogonal to the polarization of said polarized optical beam entering into said arm,
- the fourth arm (B4) being an input/output arm of said interferometer, which arm is placed so as to receive and direct a polarized incident optical beam (S₀) toward the fourth input/output port (ES4),
- the optical polarization splitting and combining means (C1) being configured so as to split component polarizations of the polarized incident beam (S₀) into a first secondary input beam (H¹₄ᵢ) and a second secondary input beam (H²₄ᵢ), said first and second secondary input beams having mutually orthogonal polarizations; the first secondary input beam (H¹₄ᵢ) propagates through the first, second and third arms of the interferometer following a first optical path in order to form a first amplified output beam (H¹₄ₒ), and the second secondary input beam (H²₄ᵢ) propagates through the first, second and third arms of the interferometer following a second optical path that is the reciprocal of the first optical path in order to form a second amplified output beam (H²₄ₒ) , said first and second amplified output beams (H¹₄ₒ, H²₄ₒ) having mutually orthogonal polarizations, and
- said splitting and recombining means (C1) being configured so as to receive and combine spatially, temporally and coherently said first amplified output beam (H¹₄ₒ) and said second amplified output beam (H²₄ₒ) , in order to form a coherent output beam (S₁) propagating through the fourth branch (B4) in the opposite direction to the polarized incident optical beam (S₀).

2. Passive coherent combination device according to Claim 1, in which said splitting and recombining means comprise a polarization beam splitter cube (C1).

3. Passive coherent combination device according to one of Claims 1 and 2, furthermore comprising an optical isolator (R4, C4) placed on the fourth arm (B4).

4. Passive coherent combination device according to one of Claims 1 to 3, in which said first, second and/or third polarizing means (R1, R2, R3) comprise a quarter-wave plate or a bidirectional Faraday rotator that is configured to rotate by 90° after two passes the polarization of a linearly polarized optical beam.

5. Passive coherent combination device according to one of Claims 1 to 4, in which said first and second optical amplifiers have the same optical amplification gain.

6. Passive coherent combination device according to one of Claims 1 to 5, in which said first and second optical amplifiers (A1, A2) each comprise a multipass optical amplifier, respectively.

7. Passive coherent combination device according to one of Claims 1 to 6, in which said first and second optical amplifiers (A1, A2) are optical fibre amplifiers.

8. Passive device for coherent combination of four optical amplifiers (A1, A2, A3, A4), comprising a passive device for coherent combination of two optical amplifiers according to one of Claims 1 to 7, in which the two subassemblies comprising an optical amplifier (A1, A2) and a mirror (M1, M2) of the first and second arms (B1, B2), respectively, are each replaced by another passive device for coherent combination of two optical amplifiers according to one of Claims 1 to 7, respectively.

9. Passive device for coherent combination of 2ⁿ optical amplifiers (A1, A2,... A2ⁿ), n being an integer higher than or equal to 1, comprising (1+2ⁿ⁻¹) passive devices for coherent combination of two optical amplifiers according to one of Claims 1 to 7, in which 2ⁿ⁻¹ passive devices for coherent combination of two optical amplifiers are placed symmetrically on the arms of a device according to one of the embodiments described according to one of Claims 1 to 7.

10. Passive method for coherent combination of a plurality of optical amplifiers comprising the following steps:
- coupling a polarized incident beam (S₀) to the fourth arm of a passive coherent combination device according to one of Claims 1 to 9;
- splitting the polarized incident beam (S₀) into a first secondary input beam (H¹) and a second secondary input beam (H²), said first and second secondary input beams having mutually orthogonal polarizations;
- addressing the first secondary input beam (H¹) so that it successively propagates through the first, second and third arms of the interferometer following a first optical path and so that the first secondary input beam (H¹) is amplified twice by the first amplifier (A1) then twice by the second amplifier (A2), in order to form a first amplified output beam (H¹₄ₒ) ;
- addressing the second secondary input beam (H²) so that it successively propagates through the first, second and third arms of the interferometer following a second optical path that is the reciprocal of the first optical path, and so that the second secondary input beam (H²) is amplified twice by the second amplifier (A2) then twice by the first amplifier (A1), in order to form a second amplified output beam (H²₄ₒ) ;
- modifying the polarization of the first secondary beam on each pass through the first, second and third arms of the interferometer, the polarization of the first secondary beam entering into an arm being orthogonal to the polarization of the first secondary beam exiting from said arm;
- modifying the polarization of the second secondary beam on each pass through the first, second and third arms of the interferometer, the polarization of the second secondary beam entering into an arm being orthogonal to the polarization of the second secondary beam exiting from said arm; and
- spatially temporally and polarization combining the first amplified output beam (H¹₄ₒ) and the second amplified output beam (H²₄ₒ) in order to form a coherent amplified output beam (S₁) propagating along the fourth arm (B4) in the opposite direction to the polarized incident optical beam (S₀).
